(19) **Europäisches Patentamt / European Patent Office / Office européen des brevets**

(11) **EP 1 426 604 B1**

(12) **EUROPEAN PATENT SPECIFICATION**

(45) Date of publication and mention
of the grant of the patent:
**12.05.2010 Bulletin 2010/19**

(51) Int Cl.:
*F02M 25/07* (2006.01)     *F16K 11/052* (2006.01)

(21) Application number: **03025779.4**

(22) Date of filing: **11.11.2003**

(54) **Flow path switching valve**

Strömungswegumschaltventil

Soupape de commutation à passage d'écoulement

(84) Designated Contracting States:
**DE ES FR GB IT**

(30) Priority: **06.12.2002   JP 2002355630**

(43) Date of publication of application:
**09.06.2004   Bulletin 2004/24**

(73) Proprietor: **AISAN KOGYO KABUSHIKI KAISHA
Obu-shi,
Aichi-ken 474-8588 (JP)**

(72) Inventor: **Hayashi, Seiichi
Obu-shi,
Aichi-ken 474-8588 (JP)**

(74) Representative: **Kramer - Barske - Schmidtchen
European Patent Attorneys
Landsberger Strasse 300
80687 München (DE)**

(56) References cited:
**EP-A1- 1 031 777     WO-A2-03/085252
FR-A- 2 811 052     GB-A- 2 199 642
US-B1- 6 286 306**

**Description**

BACKGROUND OF THE INVENTION

1. FIELD OF THE INVENTION

The present invention relates to a flow path switching valve which is applied to an EGR cooler switching valve or the like for changing over an EGR cooler, and changes over a fluid from one direction to any of two directions or changes over the fluid from any of two directions to one direction.

2. DESCRIPTION OF RELATED ART

For example, in an exhaust gas recirculation (EGR) employed in a diesel engine or the like, in the case that an exhaust gas having a high temperature is circulated to an intake side as it is, the exhaust gas in a state of being expanded at a high temperature is supplied to an intake manifold. Accordingly, there is a problem such that a rate of the exhaust gas within a cylinder is increased, whereby an amount of air within the cylinder is reduced and a combustion efficiency is deteriorated, and an exhaust gas component such as NOx or the like is deteriorated.

Accordingly, in the EGR apparatus, there has been developed an EGR apparatus with an EGR cooler in which the EGR cooler for cooling an exhaust gas on the basis of a heat exchange between the exhaust gas and a cooling water is arranged in a part of an EGR passage, and the exhaust gas having a high temperature is recirculated to an intake manifold in a state of being cooled by the EGR cooler (for example, refer to Japanese Unexamined Patent Publication No. 2001-41110 or the like).

In the EGR apparatus with the EGR cooler, in the case that a temperature of the cooling water is low such as an engine starting time, a cold condition or the like, exhaust gas is excessively cooled, so that a combustion efficiency within the cylinder and an exhaust gas component are deteriorated. Accordingly, the structure is made such that the EGR exhaust gas is circulated to a bypass passage connected with bypassing a passage of the EGR cooler, at the engine starting time, a cold condition or the like in which a temperature of the engine is lower than a normal time.

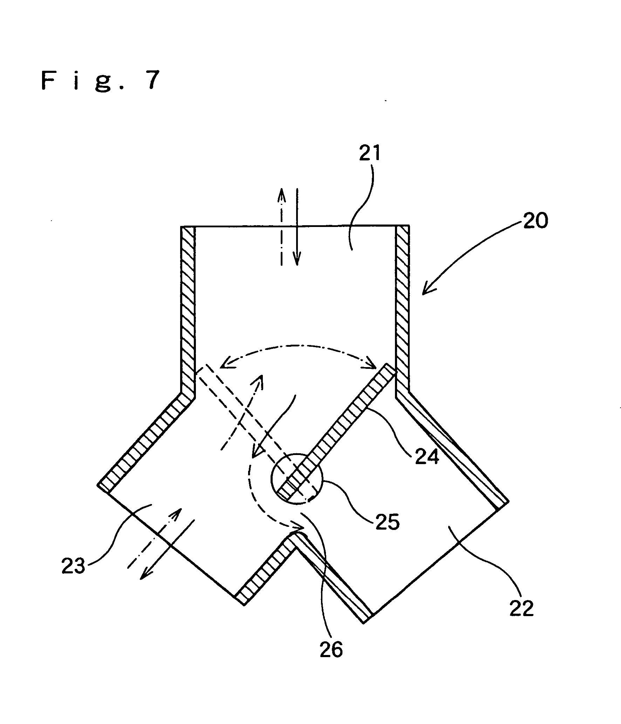

For changing over the EGR cooler between the used time and the unused time, there is employed a flow path switching valve for changing over the fluid from one direction to any of two directions or the fluid from any of two directions to one direction. The flow path switching valve 20 is conventionally structured, as shown in Fig. 7, such that a cantilever swing type valve body 24 is attached to a pipe passage formed by branching a main EGR passage 21 into an EGR cooler passage 22 and a bypass passage 23 via a valve axis 25.

However, in the flow path switching valve 20 using the normal swing type valve body 24, since a gap 26 is formed in a side of the valve axis 25 in the valve body 24, a lot of fluid leaks through the gap 26, so that there is a problem that a secure switching can not be performed.

Accordingly, for example, as described in Japanese Unexamined Utility Model Publication No. 1-28387 or the like, there has conventionally proposed a valve apparatus provided with a swing type valve body, in which a gap between a valve axis supporting the valve body and a passage wall is sealed by a seal member.

However, in the structure sealing the gap between the valve body and the passage wall in the valve apparatus mentioned above, the seal member and a peripheral structure around the seal member become complex, whereby there are problems such that a manufacturing cost is increased and a performance of the seal structure tends to be lowered due to a complex structure.

WO 03/085252 A2, which is the basis of the preamble of pended claim 1, discloses a bypass valve comprising a body defining a chamber provided with an inlet and two mutually adjacent outlets, a sealing member mounted on a pivot pin extending between the two adjacent outlets to pivot between two extreme positions under the action of control means.

US 6,286,306 B1 discloses a system for purifying exhaust gas generated by an internal combustion engine having a bypass exhaust gas passage branching from an exhaust pipe which is opened or closed by a switch-over valve.

FR 2.811.052 discloses an air flap to be used in an apparatus for guiding air. The apparatus includes at least two channels with a common mouth piece region. Furthermore, there is provided a region, which allows a tight separation of one part of the mouth piece region in each position of the air flap.

SUMMARY OF THE INVENTION

It is an object of the invention to provide a flow path switching valve according to the preamble of claim 1, which is of a simple design and allows to securely close selectively each of a passage from the first port to the second port or from the first port to the third port.

A solution of this object is achieved by flow path switching valve according to claim 1.

With the inventive switching valve due to the angle between the wing portions at the side of the valve body facing to the partition valve being smaller than 90 degree one of the wing portions closes one of the passages and the other of the wing portions closes a gap between it and the partition wall by contacting the partition wall.

Appended sub-claims are directed towards advantageous embodiments of the inventive valve.

In accordance with the flow path switching valve of the present invention, for example, in the case of using in a state in which the first port is set to an outlet port for the fluid, and the second and third ports are set to inlet ports, the valve body is rotated via the valve axis in such a manner as to change over the fluid from any of the inlet ports to the outlet port. At this time, the valve body formed in an approximately L shape in a side view rotates around the valve axis positioned near the partition wall between two inlet ports, closes one of the inlet ports by one valve wing portion, and brings or substantially brings another valve wing portion into contact with the partition wall, thereby performing a change-over operation so as to open another inlet port.

Accordingly, it is possible to close the gap between the valve axis and the partition wall by the valve wing portion at a time of changing over without using such a complex seal structure as the conventional switching valve, and it is possible to change over the valve with hardly generating the leakage of the fluid.

Further, since the valve body formed in the approximately L shape in the side view and having the valve wing portions in both sides is used, it is possible to set an angle of rotation of the valve body at a time of changing over two ports to be less than 90 degree, whereby it is possible to make an operation stroke of the actuator short.

Further, since a length of the valve wing portion can be set approximately to a radius of the valve passage without exerting an influence on an operating angle of the valve due to the length of the valve wing portion, that is, in a state in which the operating angle of the valve is set small, that is, less than 90 degree, it is possible to make the shape of the housing compact.

BRIEF DESCRIPTION OF THE DRAWINGS

Fig. 1 is a plan view of a flow path switching valve showing one embodiment in accordance with the present invention;
Fig. 2 is a front elevational view of the flow path switching valve;
Fig. 3 is a cross sectional view along a line III-III in Fig. 1;
Fig. 4 is a cross sectional view of a state in which a valve body is changed over;
Fig. 5 is a cross sectional view of a switching valve in accordance with a comparative embodiment;
Fig. 6 is a cross sectional view of a switching valve in accordance with a comparative embodiment; and
Fig. 7 is a cross sectional view of a flow path switching valve in accordance with a prior art.

DESCRIPTION OF THE PREFERRED EMBODIMENTS

A description will be given below of the present invention on the basis of an embodiment shown in the accompanying drawings. In this case, this invention is not limited to the embodiment. Every modifications within the features of claim and subjects equivalent to the features are contained in the scope of claim.

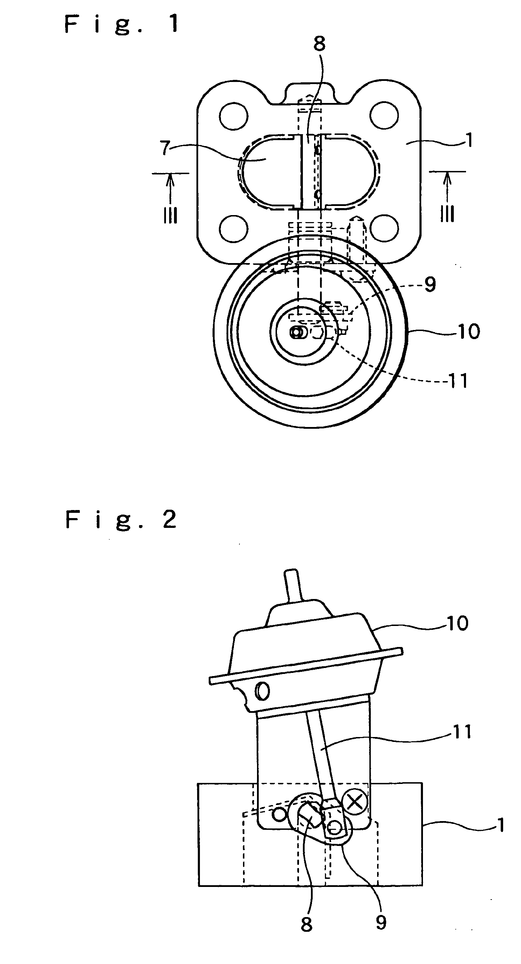

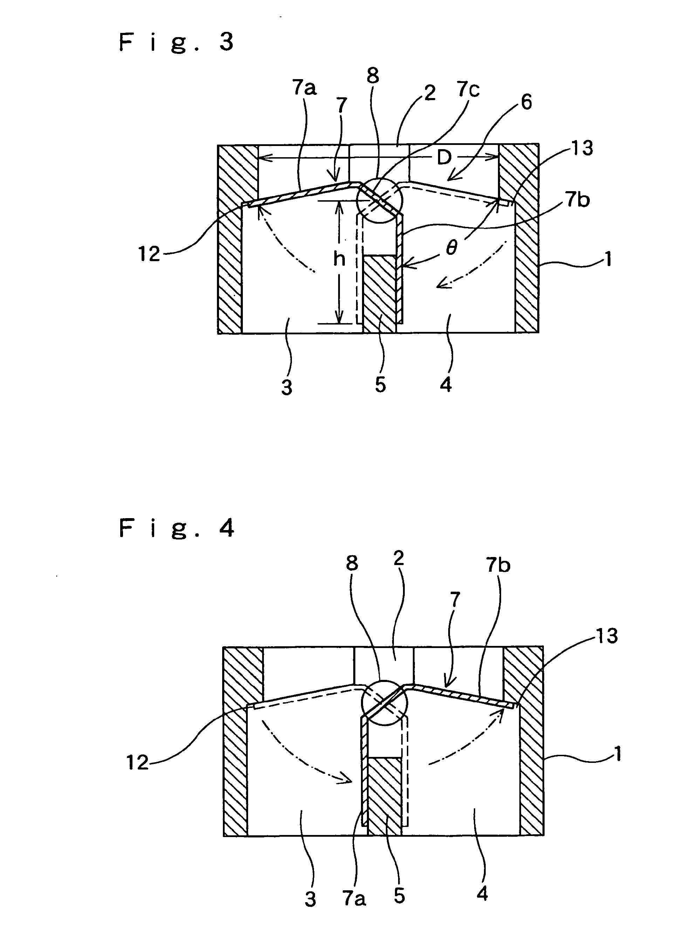

Fig. 1 shows a plan view of an exhaust gas recirculation (EGR) cooler switching valve to which the present flow path switching valve is applied, Fig. 2 shows a front elevational view thereof, and Fig. 3 shows a cross sectional view thereof. As shown in Fig. 3, a valve passage 6 penetrating vertically is formed within a housing 1. A valve body 7 is arranged within the valve passage 6 so as to be freely opened and closed via a valve axis 8.

An inlet port 2 is formed in an upper portion of the valve passage 6 so as to be open to an upper side, a lower portion of the valve passage 6 is separated into two parts by a partition wall 5 provided vertically in a center portion, and a first outlet port 3 and a second outlet port 4 are formed so as to be open to a lower side. The valve body 7 has a shaft mounting portion 7c for fixing the valve axis 8 in a center portion thereof, and is formed such that two valve wing portions 7a and 7b are extended symmetrically in both sides of the shaft mounting portion 7c. These two valve wing portions 7a and 7b are formed, as shown in Figs. 3 and 4, in an approximately L shaped open shape in a front view or a side view in such a manner that a pinched angle (an inner angle) having a predetermined angle θ is provided between both sides of the shaft mounting portion 7c. This angle θ is set to a predetermined angle less than 90 degree.

On the other hand, in the valve passage 6 within a housing 1, a contact portion 12 with which the valve wing portion 7a is brought into contact at a time of being closed is formed in a stepped shape, in a side of the first outlet port, and a contact portion 13 with which another valve wing portion 7b is brought into contact with at a time of being closed is formed in a stepped shape, in a side of another second outlet port. Further, the valve body 7 and an inner side of the valve passage 6 are formed such that in the case that the first outlet port 3 is closed, the valve wing portion 7a of the valve body 7 is brought into contact with the contact portion 12 and the valve wing portion 7b is brought into contact with a side surface of the partition wall 5 so as to completely close the side of the first outlet port. In the same manner, the valve body 7 and the inner side of the valve passage 6 are formed such that in the case that the second outlet port 4 is closed, the valve wing portion 7b of the valve body 7 is brought into contact with the contact portion 13 and the valve wing portion 7a is brought into contact with the side surface of the partition wall 5 so as to completely close the side of the second outlet port.

In the switching valve structured such that the valve passage 6 is changed over by using the valve body 7 formed in the approximately L shape in the side view, as mentioned below, it is possible to make the housing 1 compact, and it is possible to make a stroke of the actuator 10 driving the valve body so as to open and close the valve body short.

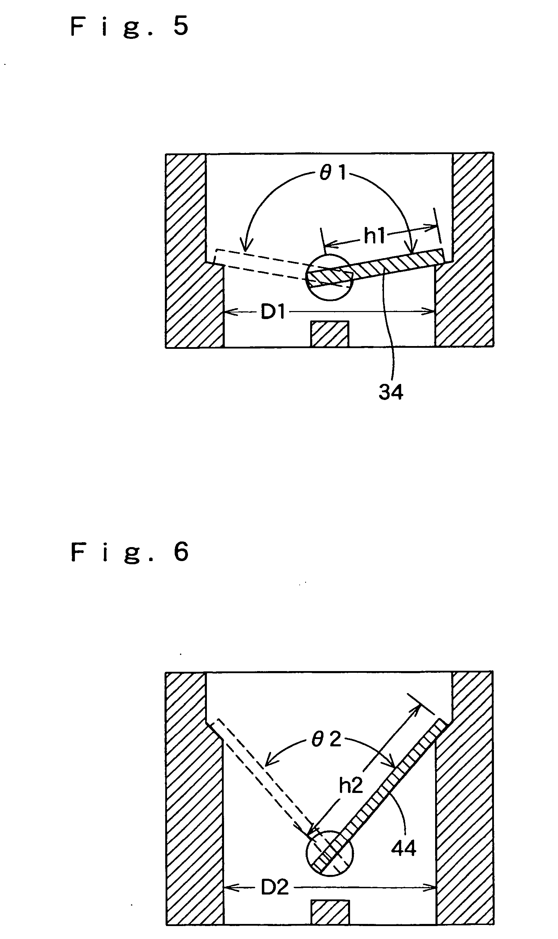

In other words, as shown in Fig. 5 showing a comparative embodiment, in the case of using a flat valve body 34, it is necessary to make a valve length h1 of the valve body 34 longer than one half of an inner diameter D1 of the valve passage, and shorter than

$$\sqrt{2} \times D1/2.$$ Further, it is intended to make the valve length h1 shorter so as to make a shape of the housing compact, a rotation angle θ1 of the valve body 34 becomes larger far over 90 degree, and the stroke of the actuator becomes longer.

On the other hand, as shown in Fig. 6 showing a comparative embodiment, in the case that a rotation angle θ2 of a valve body 44 is made small, that is, less than 90 degree, a valve length h2 of the valve body 44 becomes longer than $\sqrt{2} \times D2/2$ (D2 is an inner diameter of the valve passage), and there is generated a problem that a height of the housing is increased and the housing is made large.

On the contrary, in the flow path switching valve in accordance with the present invention, the length h of the valve wing portions 7a and 7b in the valve body 7 becomes approximately the same length as one half of the inner diameter D of the valve passage 6, and the rotation angle θ of the valve body 7 becomes small, that is, less than 90 degree, it is possible to make the stroke of the actuator 10 shorter than that of Fig. 5, and it is possible to make the housing more compact than that of Fig 6.

The valve body 7 is fixed to the valve axis 8, and both end portions of the valve axis 8 are fitted and inserted to a bearing attached to a side wall portion of the housing 1, and can rotate within a range of the rotation angle θ in the valve passage 6. Further, as shown in Fig. 3, when rotating the valve body 7 to a left side, the valve wing portion 7a of the valve body 7 is brought into contact with the contact portion 12, and the valve wing portion 7b is brought into contact with the partition wall 5, whereby the first outlet port 3 is closed, and the second outlet port 4 is communicated with the inlet port 2. Further, as shown in Fig. 4, when rotating the valve body 7 to a right side, the valve wing portion 7a of the valve body 7 is brought into contact with the partition wall 5, and the valve wing portion 7b is brought into contact with the contact portion 13, whereby the second outlet port 4 is closed, and the first outlet port 3 is communicated with the inlet port 2.

One end of the valve axis 8 protrudes to an outer side of the housing 1, and a link member 9 is fixed to a leading end thereof. A negative pressure type actuator 10 is mounted to an outer side of the housing 1, and a leading end of a rod 11 corresponding to an output shaft of the actuator 10 is connected to a leading end of the link member 9, whereby the structure is made such that when the rod 11 is moved in an axial direction in accordance with an operation of the actuator 10, the valve axis 8 is rotated via the link member 9 and the valve body 7 is operated so as to open and close. The actuator 10 has a diaphragm chamber provided with a diaphragm in, and is operated so as to move the rod 11 connected to the diaphragm in an axial direction by introducing the negative pressure to the diaphragm chamber. In this case, as the actuator, it is possible to use a motor-driven actuator such as an electric motor, an electromagnetic solenoid or the like, in addition to the negative type as mentioned above.

The EGR cooler switching valve structured in the manner mentioned above is used, for example, in an EGR apparatus with EGR cooler for a diesel engine (not shown), and the housing 1 is mounted to an intake system of the engine such that the inlet port 2 is connected to the main EGR passage, the first outlet port 3 is connected to the EGR cooler passage, and the second outlet port 4 is connected to the bypass passage. Further, for example, at an engine starting time and a cold time when the temperature of the cooling water is low, the valve body 7 closes the first outlet port 3, communicates the second outlet port 4 with the inlet port 2, and becomes in a state of recirculating the exhaust gas directly to the intake manifold through the bypass passage without passing through the EGR cooler, as shown in Fig. 3. Further, when the temperature of the cooling water is increased to a predetermined temperature or more, the actuator 10 is operated, and the valve axis 8 is rotated in a counterclockwise direction as shown in Fig. 4, closes the second outlet port 4, communicates the first outlet port 3 with the inlet port 2, and becomes in a state of recirculating the exhaust gas to the intake manifold under a condition that the exhaust gas is temporarily passed through the EGR cooler and cooled.

As mentioned above, as shown in Figs. 3 and 4, since the valve body 7 of the EGR cooler switching valve is structured such that one valve wing portion 7a or 7b is brought into contact with the contact portions 12 and 13 of the inner wall in the valve passage 6 and another valve wing portion 7a or 7b is brought into contact with the side surface of the partition wall 5 so as to open and close the valve, the port to be closed can be securely closed without generating the leakage of the fluid. In particular, since the valve wing portions 7a and 7b are brought into contact with the contact portions 12 and 13 of the inner wall and the side surface of the partition wall 5 by the surfaces, it is possible to securely close the passage in the closing side. Further, even when the contact portion in the valve body and the contact portion are worn due to the vibration or the like, it is possible to securely close the passage in the closing side without generating the leakage of the fluid, and it is possible to change over the flow path well. Further, as mentioned above, it is possible to achieve a compact structure of the housing and a compact structure of the actuator.

In this case, in the embodiment mentioned above, as shown in Figs. 3 and 4, the structure is made such that one port in the upper side is set to the inlet port 2, and two ports in the lower side are set to the outlet ports 3 and 4, however, the structure may be reversely made such that one port in the upper side is set to the outlet port, and two ports in the lower side are set to the inlet ports.

Further, in the embodiment mentioned above, the structure is made such that the changing operation is carried out by bringing the valve wing portion into contact with the side wall of the partition wall, or bringing the valve wing portion into contact with the contact portion of the inner wall, however, the structure may be made such that the passage is closed by a very small gap without the actual contact. The leakage of the fluid in this case can be restricted to a level with no problem in view of the function in the flow passage in which the switching valve is used, and it is possible to expect an effect that the leakage can be reduced.

As mentioned above, in accordance with the flow path switching valve of the present invention, it is possible to change over the valve by closing the gap between the valve axis and the partition wall at a time of changing over while generating no leakage of the fluid or restricting the leakage, without using the complex seal structure such as the conventional switching valve. Further, since the valve body formed in the L-shaped side view and having the valve wing portions in both sides, it is possible to set the rotation angle of the valve body at a time of changing over two ports small, that is, less than 90 degree, whereby it is possible to make the operation stroke of the actuator short. Further, in the conventional switching valve, when the rotation angle of the valve body is made small, the length of the valve wing portion becomes long, and the shape of the housing is made large, however, in the present flow path switching valve, since it is possible to make the length of one valve wing portion short approximately to the radius of the valve passage, and this length does not have an influence on the rotation angle of the valve body, it is possible to make the shape of the housing compact. Further, it is possible to omit the working of the seal portion on the inner wall by arranging the stepped contact portion on the inner wall.

**Claims**

1. A flow path switching valve comprising:

   (a) a first port (2) provided in a valve passage (6) within a housing (1);
   (b) a second port (3) provided in said valve passage (6) so as to be communicated with said first port;
   (c) a third port (4) provided in said valve passage (6) so as to be communicated with said first port (2); and

   said flow path switching valve changing over said second port and said third port with respect to said first port so as to communicate, wherein a partition wall (5) is formed between said second port (3) and said third port (4), a valve axis is rotably supported to a position near said partition wall (5), a valve body (7) having a shaft mounting portion (7c) in its center portion and valve wing portions (7a, 7b) extending according to the auxiliary request at both sides of the shaft mounting portion (7c), to which the valve axis is fixed, in an approximately L-shape in a side view is mounted in such a manner as to close with one of the wing portions (7a, 7b) a passage from the first port (2) to the second port (3) in one of its closing positions and after being rotated into its other closing position to close with its other wing portion (7b) a passage from the first port (2) to the third port (4),

   **characterized in that**
   an angle less than 90 degree and larger than 0 degree is formed between the wing portions (7a, 7b) at a side of the valve body (7) facing to the partition wall (5), whereby when one of the wing portions closes one of the passages the other of the wing portions closes a gap between it and the partition wall (5).

2. A flow path switching valve according to claim 1, wherein the respective wing portion (7a, 7b), which closes a gap between it and the partition wall (5), is in contact with a side surface of the partition wall.

3. A flow path switching valve according to claim 1 or 2, wherein a portion near a leading end portion of the valve wing portion (7a, 7b) in a close side is brought into contact with a stepped contact portion (12, 13) provided on an inner surface of said valve passage (6) when the valve body is in one of its closing positions.

4. A flow path switching valve according to any of claims 1 to 3, wherein the valve body (7) completely closes in its respective closing positions a respective one of the passages from the first port (2) to the second port (3) or the first port (2) to the third port (4).

5. A flow path switching valve according to any of claims 1 to 3, wherein an end portion of said valve axis is protruded to an outer side of said housing (1) and a rod (11) of an actuator (10) change-over driving said valve body (7) is connected to an end portion of said valve axis via a link.member.

**Patentansprüche**

1. Strömungswegumschaltventil mit:

   (a) einer ersten Öffnung (2), die in einem Ventildurchlass (6) innerhalb eines Gehäuses (1) vorgesehen ist;
   (b) einer zweiten Öffnung (3), die in dem Ventildurchlass (6) so vorgesehen ist, dass sie mit der ersten Öffnung in Verbindung gebracht wird;
(c) einer dritten Öffnung (3), die in dem Ventildurchlass (6) so vorgesehen ist, dass sie mit der ersten Öffnung (2) in Verbindung gebracht wird; und

dem Strömungswegumschaltventil, das zwischen der zweiten Öffnung und der dritten Öffnung in Bezug auf die erste Öffnung umschaltet, um eine Verbindung herzustellen, wobei eine Trennwand (5) zwischen der zweiten Öffnung (3) und der dritten Öffnung (4) ausgebildet ist, eine Ventilachse drehbar an einer Position nahe der Trennwand (5) gehalten wird, ein Ventilkörper (7) mit einem Schaftbefestigungsbereich (7c) an seinem zentralen Bereich und Ventilflügelbereichen (7a, 7b), die sich an beiden Seiten des Schaftbefestigungsbereichs (7c), an dem die Ventilachse fixiert ist, von der Seite gesehen, in etwa in einer L-Form erstrecken, so befestigt ist, dass er mit einem der Flügelbereiche (7a, 7b) einen Durchlass von der ersten Öffnung (2) zu der zweiten Öffnung (3) in einer seiner Schließpositionen schließt, und, nachdem er in seine andere Schließposition gedreht wurde, mit seinem anderen Flügelbereich (7b) einen Durchlass von der ersten Öffnung (2) zu der dritten Öffnung (4) schließt,

**dadurch gekennzeichnet, dass**
ein Winkel kleiner als 90 Grad und größer als 0 Grad zwischen den Flügelbereichen (7a, 7b) an einer Seite des Ventilkörpers (7), die zur Trennwand (5) zeigt, ausgebildet ist, wobei, wenn einer der Flügelbereiche einen der Durchlässe schließt, der andere der Flügelbereiche einen Spalt zwischen sich und der Trennwand (5) schließt.

2. Strömungswegumschalventil nach Anspruch 1, wobei der entsprechende Flügelbereich (7a, 7b), der einen Spalt zwischen sich und der Trennwand (5) schließt, in Berührung mit der Seitenfläche der Trennwand ist.

3. Strömungswegumschaltventil nach Anspruch 1 oder 2, wobei ein Bereich nahe einem vorderen Endbereich des Ventilflügelbereichs (7a, 7b) auf einer Schließseite in Berührung mit einem gestuften Berührungsbereich (12, 13) gebracht wird, der auf einer Innenfläche des Ventildurchlasses (6) vorgesehen ist, wenn sich der Ventilkörper in einer seiner Schließpositionen befindet.

4. Strömungswegumschaltventil nach einem der Ansprüche 1 bis 3, wobei der Ventilkörper (7) in seinen entsprechenden Schließpositionen einen entsprechenden der Durchlässe von der ersten Öffnung (2) zu der zweiten Öffnung (3) oder von der ersten Öffnung (2) zu der dritten Öffnung (4) vollständig schließt.

5. Strömungswegumschaltventil nach einem der Ansprüche 1 bis 3, wobei ein Endbereich der Ventilachse, zu einer Außenseite des Gehäuses (1) hervorsteht und eine Stange (11) eines Aktuators (10), die den Ventilkörper (7) umschaltend antreibt, über ein Verbindungsglied mit einem Endbereich der Ventilachse verbunden ist.

**Revendications**

1. Soupape de commutation de trajet d'écoulement comprenant :

(a) un premier orifice (2) ménagé dans un passage de soupape (6) à l'intérieur d'un logement (1) ;
(b) un deuxième orifice (3) ménagé dans ledit passage de soupape (6) afin d'être mis en communication avec ledit premier orifice ;
(c) un troisième orifice (4) ménagé dans ledit passage de soupape (6) afin d'être mis en communication avec ledit premier orifice (2) ; et

ladite soupape de commutation de trajet d'écoulement permutant ledit deuxième orifice et ledit troisième orifice par rapport audit premier orifice afin de communiquer,
dans laquelle une paroi de séparation (5) est formée entre ledit deuxième orifice (3) et ledit troisième orifice (4), un axe de soupape est supporté à rotation dans une position proche de ladite paroi de séparation (5), un corps de soupape (7) ayant une partie de montage d'arbre (7c) dans sa partie centrale et des parties de papillon de soupape (7a, 7b) s'étendant des deux côtés de la partie de montage d'arbre (7c), sur laquelle est fixé l'axe de soupape, à peu près en forme de L en vue latérale est montée de manière à fermer, avec une de parties de papillon (7a, 7b), un passage allant du premier orifice (2) au deuxième orifice (3) dans une de ses positions de fermeture et, après avoir effectué une rotation dans son autre position de fermeture, de manière à former, avec son autre partie de papillon (7b), un passage allant du premier orifice (2) au troisième orifice (4),
**caractérisée en ce que**
un angle inférieur à 90 degrés et supérieur à 0 degré est formé entre les parties de papillon (7a, 7b) d'un côté du corps de soupape (7) faisant face à la paroi de séparation (5), de sorte que, lorsqu'une des parties de papillon ferme un des passages, l'autre des parties de papillon ferme un intervalle compris entre elle et la paroi de séparation (5).

2. Soupape de commutation de trajet d'écoulement selon la revendication 1, dans laquelle la partie de papillon respective (7a, 7b), qui ferme un intervalle compris entre elle et la paroi de séparation (5), est en contact avec une surface latérale de la paroi de séparation.

3. Soupape de commutation de trajet d'écoulement selon la revendication 1 ou 2, dans laquelle une partie proche de la partie d'extrémité avant de la partie de papillon de soupape (7a, 7b) d'un côté fermé est amené en contact avec une partie de contact étagée (12, 13) aménagée sur une surface interne dudit passage de soupape (6) lorsque le corps de soupape est dans une de ses positions de fermeture.

4. Soupape de commutation de trajet d'écoulement selon l'une quelconque des revendications 1 à 3, dans laquelle le corps de soupape (7) ferme complètement, dans ses positions de fermeture respectives, un respectif des passages allant du premier orifice (2) au deuxième orifice (3) ou du premier orifice (2) au troisième orifice (4).

5. Soupape de commutation de trajet d'écoulement selon l'une quelconque des revendications 1 à 3, dans laquelle une partie d'extrémité dudit axe de soupape fait saillie vers un côté externe dudit logement (1) et une tige (11) d'un dispositif d'actionnement (10) entraînant en permutation ledit corps de soupape (7) est raccordée à une partie d'extrémité dudit axe de soupape via un élément de liaison.

Fig. 1

Fig. 2

# Fig. 3

# Fig. 4

# Fig. 5

# Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001041110 A
- JP 1028387 U
- WO 03085252 A2
- US 6286306 B1
- FR 2811052